# EUROPÄISCHE PATENTSCHRIFT

(11) **EP 1 146 296 B1**
(45) Veröffentlichungstag und Bekanntmachung des Hinweises auf die Patenterteilung: **10.09.2003**
(21) Anmeldenummer: 01810348.1
(22) Anmeldetag: 09.04.2001
(51) Int. Cl.: F24J 2/04, F24J 2/46

(54) **Modulartiger Solarkollektor**
Modular solar collector
Collecteur solaire modulaire

(30) Priorität: 10.04.2000 CH 7082000
(43) Veröffentlichungstag der Anmeldung: 17.10.2001
(73) Patentinhaber: Soltop Schuppisser AG, 8353 Elgg (CH)
(72) Erfinder: Schuppisser, Fritz, 8400 Winterthur (CH)
(74) Vertreter: Gachnang, Hans Rudolf

(56) Entgegenhaltungen:
- DE-A- 2 523 976
- DE-A- 2 756 316
- DE-C- 19 745 883
- FR-A- 2 427 558
- US-A- 4 132 217

## Beschreibung

Gegenstand der Erfindung ist ein modulartiger Solarkollektor gemäss Oberbegriff des Patentanspruchs 1.

Solarkollektoren für die Montage auf oder in Dächern für die Erwärmung von Brauch- und Heizwasser sind bekannt und umfassen einen kastenförmigen Behälter, dessen Wände isoliert sind und dessen Abdeckung oder Deckel aus Glas besteht. Im Innern, d.h. unterhalb des Glases, liegt ein Absorber aus vorzugsweise geschwärztem Blech und mit diesem gut wärmeleitend verbunden sind an dessen Rückseite serpentinenartig verlegte Rohre befestigt. Diese dienen zur Abfuhr der von der Sonne auf dem als Absorber dienenden Blech erzeugten Wärme mittels einer gut wärmeleitenden Flüssigkeit. Entlang der oberen Ränder des Rahmens sind Auflageflächen für die Auflage des Glases und Abdichtungsmittel zum Abdichten des Behälterinnern gegen das Eindringen von Regenwasser ausgebildet.

Bei den vorzugsweise geneigt zur Horizontalen angeordneten Solarkollektoren sammelt sich das Wasser an deren Unterkante und es besteht die latente Gefahr, dass an den Gummidichtungen zurückgestautes Wasser die Auflageflächen unterkriecht und in die Kollektoren eintreten und diese beschädigen bzw. deren Wirkungsgrad verringern kann.

Es ist auch bekannt, Solarkollektoren in kastenförmige Behälter ohne die Glasabdeckung am Standort, z.B. auf dem Dach eines Hauses, zu montieren und danach die Unterkante des Sonnenkollektor-Behälters überragende Deckgläser aufzusetzen. Die für Sonnenkollektoren verwendeten gehärteten Gläser sind an den Kanten sehr empfindlich auf mechanische Belastung und werden durch diese Verlegungsart sehr rasch beschädigt. Zudem ist die Montage von solchen Sonnenkollektoren sehr zeitaufwendig und aus Kostengründen unvorteilhaft. Die Montage der bekannten Sonnenkollektoren ist insbesondere aufwendig, da der Handwerker Teile des Sonnenkollektors vor dessen Montage abnehmen und später nach dem Zusammenfügen der Kollektoren wieder einsetzen muss. Dabei besteht die latente Gefahr, dass die Abdichtungen unsorgfältig oder unfachmännisch eingesetzt werden und dadurch Leckstellen entstehen können.

Aufgabe der vorliegenden Erfindung ist die Schaffung eines kastenförmigen Solarkollektors, der dachziegelartig mit gleichartigen Solarkollektoren betriebfertig zusammenfügbar ist.

Gelöst wird diese Aufgabe durch einen Solarkollektor mit den Merkmalen des Patentanspruchs 1. Vorteilhafte Ausgestaltungen der Erfindung sind in den abhängigen Ansprüchen definiert.

Die Ausbildung einer die untere Kante bildenden Auflagefläche als über das darunter liegende Rahmenteil hinaus sich erstreckendes Profil erlaubt es, das Abdeckglas sicher und abgestützt und mit geschützter Glaskante gegen Beschädigung geschützt über den Rahmen hinaus zu führen. Die zwischen Glasrand und dem Ende des Profilteils zu liegen kommende Dichtungsmasse kann unterschiedliche Ausdehnungskoeffizienten und Masstoleranzen zwischen dem Rahmen und dem Glas ohne weiteres aufnehmen. Die unter dem Glas auf dem Schenkel liegende Dichtung isoliert das sich durch das Sonnenlicht erwärmende Glas vom darunter liegenden aus Metall bestehenden Rahmen und verhindert den Abfluss von Wärme in den Rahmen.

Die erfindungsgemässen Sonnenkollektoren können unter optimalen Bedingungen im Werk vollständig fertiggestellt werden und es müssen auf dem Dach oder an einem anderen Aufstellungsort nur noch die Verbindungsleitungen für die Wärmeträgerflüssigkeit mit handelsüblichen Mitteln angeschlossen werden. Die Montage dieser fertiggestellten Sonnenkollektoren 3 auf dem Dach oder einer andern Tragfläche 1 kann durch einen Spengler oder Dachdecker erfolgen. Der die Sonnenkollektoren versetzende Handwerker kann diese wie Dachziegel schuppenartig überlappend verlegen. Dadurch wird sichergestellt, dass die werkseitige Abdichtung des Innern des Sonnenkollektors erhalten bleibt. Die gegenseitige Abdichtung der sich überlappenden Bereiche erfolgt entweder durch die an der hinteren Kollektorkante angebrachte auf der Abdeckung liegende Dichtung oder durch eine an der Unterseite der überlappenden Auflagefläche befestigte Dichtung.

Anhand eines illustrierten Ausführungsbeispiels wird die Erfindung näher erläutert. Es zeigen
- Figur 1: einen Querschnitt durch drei dachziegel- oder schuppenartig überlappend angeordnete Solarkollektoren und
- Figur 2: einen Querschnitt durch den Bereich des Deckels eines Solarkollektors.

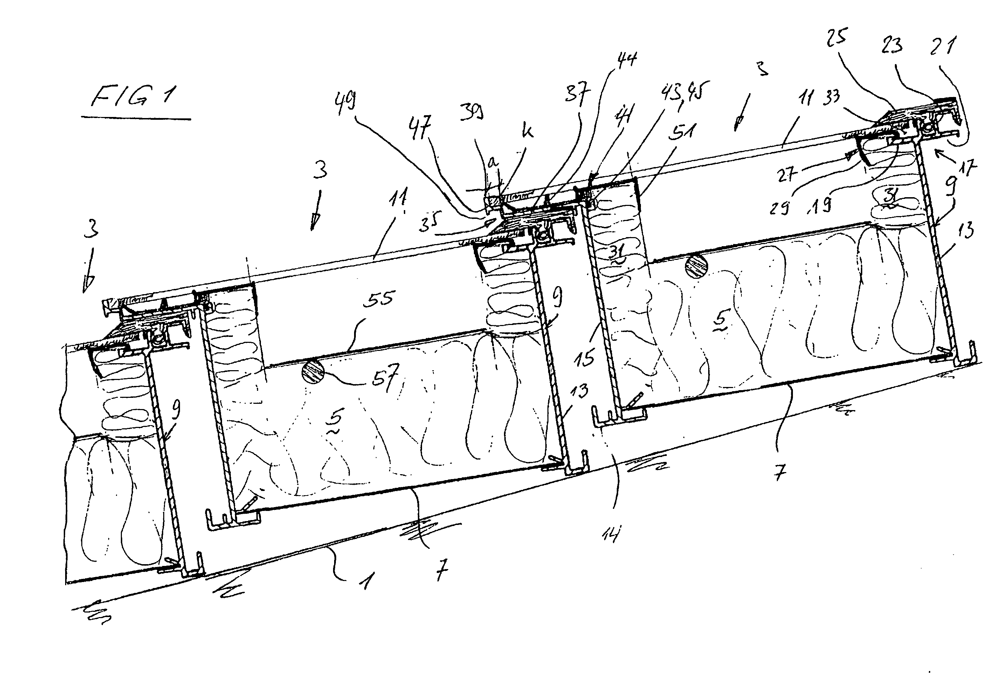

Auf einer Dachkonstruktion oder einer andern geeigneten Auflagefläche 1 sind in der Figur 1 kastenförmige Solarkollektoren 3 in dachziegel- oder schuppenartig überlappender Anordnung aneinandergefügt. Die Solarkollektoren 3 umfassen einen Behälter 5 mit je einem Boden 7 und einem rechteckförmigen Rahmen 9. Die oben liegende Öffnung des Behälters 5 ist durch eine Abdeckung oder einen Deckel 11 aus Glas, vorzugsweise gehärtetem Glas, verschlossen. In den Abbildungen sind vom Behälter 5 in Schnittdarstellung jeweils der hintere Rahmenteil 13 und der vordere Rahmenteil 15 sichtbar. Die beiden seitlichen Rahmenteile verlaufen vorzugsweise in einem rechten Winkel zum vorderen und hinteren Rahmenteilen 13,15.

An den oben liegenden Kanten des hinteren Rahmenteils 13 sowie der beiden seitlichen Rahmenteile sind eine erste Auflagefläche 17 ausgebildet, welche einen gegen das Behälterinnere gerichteten ersten Schenkel 19 und einen nach aussen abstehenden den Rahmenteil 13 überragenden zweiten Schenkel 21 umfasst. Die Auflagefläche 17 umfasst weiter ein Mittel, z.B. eine Nut 23, in welcher ein Dichtungsmittel 25 eingelegt und festgeklemmt werden kann. Das Dichtungsmittel 25 umfasst ein Gummiprofil, welches sich über den ersten Schenkel 19 erstreckt und eine Abdichtung zwischen der Glasoberfläche des Deckels 11 und dem nach aussen gerichteten zweiten Schenkel 21 bewirkt. Die auf der Abdeckung 11 liegende Kante des Dichtungsmittels 25 weist vorzugsweise einen messerscharf auslaufenden Rand auf. Das Dichtungsmittel 25 erstreckt sich mindestens über die gesamte Länge des hinteren Rahmenteils 13 sowie vorzugsweise auch über die seitlichen Rahmenteile. Das Dichtungsmittel 25 kann zu diesem Zweck u-förmig konfektioniert werden und ist an den Ecken, d.h. den Übergängen vom hinteren Rahmenteil 13 zu den seitlichen Rahmenteilen vulkanisiert und dadurch völlig wasserdicht. Zwischen dem gegen das Behälterinnere gerichteten ersten Schenkel 19 und der Unterseite des Deckels 11 liegt vorzugsweise eine Auflagedichtung 27, welche einen nach unten gerichteten Halteschenkel 29 zum Festhalten einer Isolation 31 aufweisen kann. Die Isolation 31 liegt an den Rahmenteilen 13,15 sowie an den seitlichen Rahmenteilen an. Vorzugsweise erstreckt sich die Auflagedichtung 27 nicht über die gesamte Oberfläche des Schenkels 19, so dass ein Kanal 33 entsteht, durch welchen gegebenenfalls entstehendes Kondens- oder eingedrungenes Wasser abführbar ist.

Die Oberkante des vorderen Rahmenteils 15 weist eine Auflagefläche 35 auf, die einen nach aussen gerichteten Tragschenkel 37 umfasst. Die aussen liegende Kante bildet einen Absatz 39, dessen Höhe etwa der Dicke des Glases der Abdeckung 11 entspricht. Auf dem nach aussen gerichteten Tragschenkel 37 liegt eine bandförmige Gummidichtung 41, welche vorzugsweise eine nach unten gerichtete Rippe 43 aufweist, die von einer Nut 45 festgehalten wird. An der Gummidichtung 41 sind in einer besonders vorteilhaften Ausgestaltung nach oben gerichtete, parallel zum Absatz 39 verlaufende Rippen 44 ausgebildet, auf denen die Unterseite der Abdeckung 11 nur linienförmig aufliegt. Durch diese Massnahme, d.h. die linienförmige Auflage der Abdeckung 11 auf der Gummidichtung 41 wird eine optimale Isolation des Glases bezüglich des wärmeableitenden Rahmens 15 erreicht und zusätzlich wird die Dichtung 41 nicht durch die unterschiedlichen Ausdehnungskoeffizienten des Behalters 5 bzw. des den Behälter 5 bildenden Rahmens 9 und dem Glas, aus dem der Deckel 11 hergestellt ist, belastet. Die unten liegende Kante k der Abdeckung 11 liegt in einem Abstand a zum Absatz 39. Dieser Abstand a ist durch eine als Dilatationsfuge dienende Dichtmasse 47 ausgefüllt. Die Oberfläche der Abdeckung 11 und die oben liegende Kante des Absatzes 39 bilden eine Ebene, so dass auf der Abdeckung 11 nach unten fliessendes Wasser über die Oberkante des Absatzes 9 hinwegfliessen kann und nicht gestaut wird.

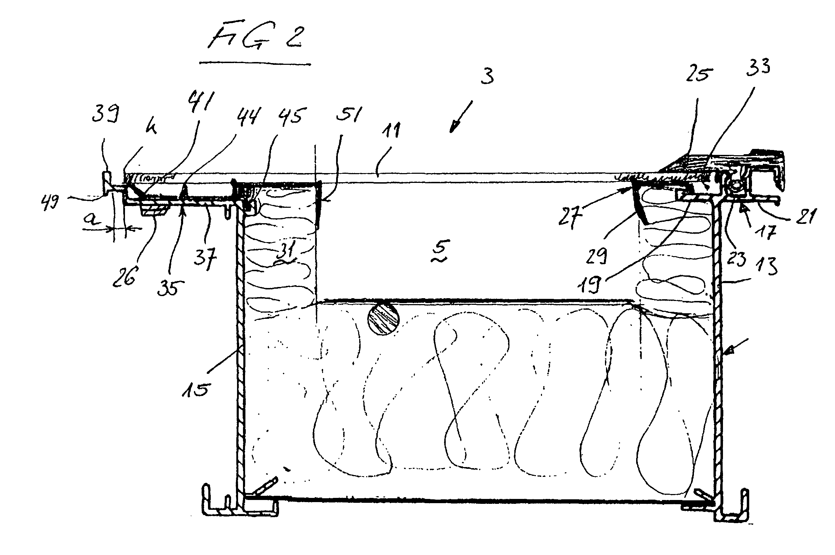

Die Breite der zweiten Auflagefläche 35 ist vorzugsweise grösser als die Breite des Dichtungsmittels 25 über der ersten Auflagefläche 17. Dadurch kann eine Tropfkante 49 entstehen, von der abfliessendes Wasser direkt auf die Oberfläche der darunter liegenden Abdeckung 11 des benachbarten Sonnenkollektors 3 abfliessen kann. Alternativ oder zusätzlich zum Dichtungsmittel 25 kann an der Unterseite der Auflagefläche 35 ein Dichtungsgummi 26 angeklebt sein (Figur 2), der direkt zur Auflage auf der Abdeckung 11 gelangt und durch das Gewicht des Kollektors 3 angepresst wird.

Die Gummidichtung 41 auf der Auflagefläche 35 erstreckt sich vorzugsweise soweit gegen das Innere des Behälters 5 und umfasst einen nach unten gerichteten Abschnitt 51, mit welchem die darunter liegende Isolation 31 fixierbar ist. Die plattenartige Isolation 31 erstreckt sich nicht nur entlang den Rahmenteilen 13,15 sowie den seitlichen Rahmenteilen, sondern auch über den Bereich des Bodens 7 und bewirkt eine optimale Isolation eines Absorberblechs 55 und den darunter befestigten Rohren 57 für die Wärmeleitflüssigkeit.

Die drei in Figur 1 dargestellten Behälter 5 stützen sich jeweils mit dem hinteren Rahmenteil 13 auf der Dachkonstruktion oder Unterlage 1 ab. Die Unterkanten 14 der vorderen Rahmenteile 15 sind vorzugsweise nicht abgestützt, sondern die Abstützung des Behälters 5 erfolgt durch sattes Aufliegen der Auflagefläche 35 auf dem Dichtungsmittel 25 des benachbarten Sonnenkollektors 3 und/oder der Dichtung 26.

## Patentansprüche

1. Modulartiger Solarkollektor (3) zum Erwärmen von Brauch- und Heizwasser, umfassend einen Behälter (5) mit einem Rahmen (9) und einem Boden (7) sowie einer Abdeckung (11) aus Glas, einen im Behälter (5) eingesetzten Absorber (55) aus Blech, auf dem ein Rohr (57) wärmeleitend verlegt ist und eine innerhalb des Behälters (5) eingelegte Isolation (31), weiter umfassend an den Oberkanten von zwei einander gegenüberliegenden, parallel verlaufenden hinteren (13) und vorderen Rahmenteilen (15) ausgebildete Auflageflächen (17,35) für die Abdeckung (11) aus Glas, **dadurch gekennzeichnet, dass**
- die erste Auflagefläche (17) einen ersten gegen das Behälterinnere gerichteten Schenkel (19) für die Auflage der Abdeckung (11) und einen zweiten nach aussen gerichteten Schenkel (21) umfasst,
- die zweite Auflagefläche (35) einen nach aussen gerichteten Schenkel (37) zur Abstützung der den Behälterrahmen (9) überragenden Abdeckung (11) umfasst, der weiter dazu ausgebildet und bestimmt ist, auf einem Dichtungsmittel (25,26), das zwischen der Unterseite des zweiten Schenkels (37) und der Oberseite eines benachbart angeordneten Sonnenkollektors (3) angeordnet ist, satt aufzuliegen.

2. Solarkollektor nach Anspruch 1, **dadurch gekennzeichnet, dass** der zweite Schenkel (21) Mittel zum Festhalten des Dichtungsmittels (25) umfasst.

3. Solarkollektor nach Anspruch 1, **dadurch gekennzeichnet, dass** das Dichtungsmittel (25) die Abdeckung (11) und den zweiten Schenkel (21) überlappt.

4. Solarkollektor nach einem der Ansprüche 1 bis 3, **dadurch gekennzeichnet, dass** am nach aussen gerichteten Schenkel (37) der zweiten Auflagefläche (35) ein etwa der Dicke des Glases (11) entsprechender nach oben gerichteter Absatz (39) ausgebildet ist.

5. Solarkollektor nach einem der Ansprüche 1 bis 4, **dadurch gekennzeichnet, dass** der Absatz (39) in einem horizontalen Abstand (a) zur Kante (k) der Abdeckung (11) liegt und der Zwischenraum zur Bildung einer Dilatationsfuge mit einer elastischen Dichtungsmasse auffüllbar ist.

6. Solarkollektor nach einem der Ansprüche 1 bis 5, **dadurch gekennzeichnet, dass** zwischen der Oberfläche des nach aussen gerichteten Schenkels (37) und der Unterseite der Abdeckung (11) eine elastische Dichtung (41) mit parallel zum Rahmenteil (15) verlaufenden, die Abdeckung (11) tragenden Rippen (44) eingelegt ist.

7. Solarkollektor nach Anspruch 6, **dadurch gekennzeichnet, dass** die Dichtung (41) am Rahmenteil (15) festgeklemmt ist und einen gegen das Innere des Behälters (5) ragenden L-förmigen Abschnitt (51) zum Festhalten der Isolation (31) für den Rahmenteil (15) aufweist.

8. Solarkollektor nach einem der Ansprüche 1 bis 7, **dadurch gekennzeichnet, dass** an der Unterseite des nach aussen gerichteten Schenkels (37) ein von oben in Auflage auf dem Dichtmittel (25) eines benachbarten Solarkollektors (3) zu gelangen bestimmter Dichtungsgummi (26) befestigt ist.

9. Solarkollektor nach einem der Ansprüche 4 bis 8, **dadurch gekennzeichnet, dass** an der Unterkante des Absatzes (39) eine Tropfkante (49) ausgebildet ist.

10. Solarkollektor nach einem der Ansprüche 1, 3 bis 9, **dadurch gekennzeichnet, dass** der Dichtungsgummi (26) auf der Unterseite des Schenkels (37) befestigt ist.

## Claims

1. A modular solar collector (3) for heating service water and heating water, comprising a container (5) with a frame (9) and a base (7) as well as with a covering (11) of glass, an absorber (55) of sheet metal which is applied in the container (5) and on which a tube (57) is applied in a heat-conducting manner, and an insulation (31) applied within the container (5), further comprising rest surfaces (17, 35) for the covering (11) of glass which are formed on the upper edges of two rear (13) and front frame parts (15) which lie opposite one another and run parallel, **characterised in that**
- the first rest surface (17) comprises a first limb (19) directed towards the inside of the container for the resting of the covering (11) and a second outwardly directed limb (21),
- the second rest surface (35) comprises an outwardly directed limb (37) for support of the covering (11) projecting beyond the container frame (9) which is further designed and envisaged to snugly rest on a sealing means (25, 26) which is arranged between the lower side of the second limb (37) and the upper side of an adjacently arranged solar collector (3).

2. A solar collector according to claim 1, **characterised in that** the second limb (21) comprises means for securing the sealing means (25).

3. A solar collector according to claim 1, **characterised in that** the sealing means (25) overlaps the covering (11) and the second limb (21).

4. A solar collector according to one of the claims 1 to 3, **characterised in that** on the outwardly directed limb (37) of the second rest surface (35) there is formed an upwardly directed shoulder (39) corresponding roughly to the thickness of the glass (11).

5. A solar collector according to one of the claims 1 to 4, **characterised in that** the shoulder (39) lies at a horizontal distance (a) to the edge (k) of the covering (11) and the intermediate space may be filled with an elastic sealing mass for forming a dilatation gap.

6. A solar collector according to one of the claims 1 to 5, **characterised in that** between the surface of the outwardly directed limb (37) and the lower side of the covering (11) there is applied an elastic seal (41) with ribs (44) running parallel to the frame part (15) and carrying the covering (11).

7. A solar collector according to claim 6, **characterised in that** the seal (41) is rigidly clamped on the frame part and comprises an L-shaped section (51) for securing the insulation (31) for the frame part (15), said section projecting towards the inside of the container (5).

8. A solar collector according to one of the claims 1 to 7, **characterised in that** on the lower side of the outwardly directed limb (37) there is fastened a sealing rubber (26) which is envisaged to come to rest on the sealing means (25) of an adjacent solar collector (3) from above.

9. A solar collector according to one of the claims 4 to 8, **characterised in that** a drip edge (49) is formed on the lower edge of the shoulder (39).

10. A solar collector according to one of the claims 1, 3 to 9, **characterised in that** the sealing rubber (26) is fastened on the lower side of the limb (37).

## Revendications

1. Collecteur solaire (3) modulaire pour le réchauffement de l'eau domestique et de l'eau de chauffage, comprenant un réservoir (5) avec un cadre (9) et un fond (7) ainsi qu'un couvercle (11) en verre, un absorbeur (55) en tôle métallique placé dans le réservoir (5) sur lequel un tuyau (57) conduisant la chaleur est posé, et une isolation (31) placée à l'intérieur du réservoir (5), comprenant en outre des surfaces d'appui (17, 35) pour le couvercle (11) en verre formées aux arêtes supérieures de deux parties de cadre avant (15) et arrière (13) opposées et s'étendant parallèlement l'une à l'autre, **caractérisé en ce que**
- la première surface d'appui (17) comprend un premier montant (19) orienté contre l'intérieur du réservoir pour l'appui du couvercle (11) et un second montant (21) orienté vers l'extérieur,
- la seconde surface d'appui (35) comprend un montant (37) orienté vers l'extérieur pour le soutien du couvercle (11) dépassant en hauteur le cadre (9) du réservoir, montant en outre réalisé et conçu pour être posé à point plat sur un élément d'étanchéité (25, 26) qui est disposé entre le côté inférieur du second montant (37) et le côté supérieur d'un collecteur solaire (3) disposé dans son voisinage.

2. Collecteur solaire selon la revendication 1, **caractérisé en ce que** le second montant (21) comprend des moyens pour maintenir l'élément d'étanchéité (25).

3. Collecteur solaire selon la revendication 1, **caractérisé en ce que** l'élément d'étanchéité (25) recouvre en partie le couvercle (11) et le second montant (21).

4. Collecteur solaire selon l'une quelconque des revendications 1 à 3, **caractérisé en ce qu'**un épaulement (35) orienté vers le haut correspondant à peu près à l'épaisseur du verre (11) est formé au niveau du montant (37) orienté vers l'extérieur de la seconde surface d'appui (35).

5. Collecteur solaire selon l'une quelconque des revendications 1 à 4, **caractérisé en ce que** l'épaulement (39) est situé à une distance horizontale (a) de l'arête (k) du couvercle (11) et **en ce que** l'espace intermédiaire peut être rempli avec une masse d'étanchéité élastique afin de former un joint de dilatation.

6. Collecteur solaire selon l'une quelconque des revendications 1 à 5, **caractérisé en ce qu'**entre la surface supérieure du montant (37) orienté vers l'extérieur et la surface inférieure du couvercle (11) est posé un joint d'étanchéité élastique (41) avec des nervures (44) portant le couvercle (11) et s'étendant parallèlement à la partie de cadre (15).

7. Collecteur solaire selon la revendication 6, **caractérisé en ce que** le joint d'étanchéité (44) est fixé solidement à la partie de cadre (15) et présente une section en forme de L faisant saillie vers l'intérieur du réservoir (5) pour maintenir l'isolation (31) destinée à la partie de cadre (15).

8. Collecteur solaire selon l'une quelconque des revendications 1 à 7, **caractérisé en ce qu'**un caoutchouc d'étanchéité (26) est fixé au niveau de la surface inférieure du montant (37) orienté vers l'extérieur pour vernir d'en haut en appui sur l'élément d'étanchéité (25) d'un collecteur solaire (3) voisin.

9. Collecteur solaire selon l'une quelconque des revendications 4 à 8, **caractérisé en ce qu'**une arête d'égouttage (49) est formée au niveau de l'arête inférieure de l'épaulement (39).

10. Collecteur solaire selon l'une quelconque des revendications 1, 3 à 9, **caractérisé en ce que** le caoutchouc d'étanchéité (26) est fixé sur la surface inférieure du montant (37).
